# FASCICULE DE BREVET EUROPEEN

(11) **EP 4 237 665 B1**
(45) Date de publication et mention de la délivrance du brevet: **27.11.2024**
(21) Numéro de dépôt: 21816126.3
(22) Date de dépôt: 27.10.2021
(51) Int. Cl.: F01D 9/04, F01D 11/00, F01D 25/24, F01D 25/00

(54) **ASSEMBLAGE POUR TURBINE COMPRENANT DES SECTEURS AVEC LANGUETTES D'ETANCHEITE LAMIFIEES**
BAUGRUPPE FÜR TURBINE MIT SEKTOREN MIT LAMINIERTEN DICHTUNGSTABS
ASSEMBLY FOR TURBINE COMPRISING SECTORS WITH LAMINATED SEAL TABS

(30) Priorité: 30.10.2020 FR 2011153
(43) Date de publication de la demande: 06.09.2023
(73) Titulaire: Safran Ceramics, 33185 Le Haillan (FR)
(72) Inventeur: GARNIER, Gildas, 77550 MOISSY-CRAMAYEL (FR); HENNE, Jean-François, 77550 MOISSY-CRAMAYEL (FR)
(74) Mandataire: Cabinet Beau de Loménie
(86) Numéro de dépôt international: PCT/FR2021/051890
(87) Numéro de publication internationale: WO 2022/090667

(56) Documents cités:
- EP-A1- 3 626 934
- WO-A1-2014/150147
- US-A1- 2011 020 113
- US-A1- 2017 370 239
- US-A1- 2019 153 886
- US-A1- 2020 355 089

## Description

### Domaine Technique

La présente invention concerne des pièces de turbomachine ou turbine à gaz entre lesquelles une étanchéité doit être réalisée au moyen d'au moins une languette d'étanchéité présente dans des rainures ou logements au niveau des bords de liaison des pièces adjacentes.

L'invention concerne par exemple, mais non exclusivement, un ensemble d'anneau de turbine pour une turbomachine, lequel ensemble comprend une pluralité de secteurs d'anneau en matériau composite à matrice céramique. L'étanchéité entre les secteurs d'anneau adjacents est réalisée par une ou plusieurs languettes d'étanchéité logées dans des rainures usinées dans les bords de liaison des secteurs.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées. L'utilisation de CMC pour différentes parties chaudes de moteurs aéronautiques a déjà été envisagée, d'autant que les CMC ont une masse volumique inférieure à celle de métaux réfractaires traditionnellement utilisés.

La réalisation d'un ensemble d'anneau de turbine à partir de secteurs d'anneau en CMC est notamment décrite dans le document WO 2017/060604. L'étanchéité entre les secteurs d'anneau adjacents est réalisée par une ou plusieurs languettes d'étanchéité logées dans des rainures usinées dans les bords de liaison des secteurs. Les documents EP 3 626 934, US 2017/370239, US 2011/020113, WO 2014/150147 et US 2019/153886 divulguent des exemples de languettes d'étanchéité utilisées dans des turbines à gaz.

Le matériau CMC développé pour les turbines est en général à base de fibres en carbure de silicium (SiC) et de matrice SiC. Toutefois, du fait de sa gamme de fabrication, le matériau contient encore du silicium sous forme métallique, dit « silicium libre ».

Les languettes actuellement utilisées pour l'étanchéité entre les secteurs sont en alliages bases nickel ou base cobalt (ex : HA188). Ces alliages sont choisis pour leur tenue mécanique à haute température et leur tenue à l'oxydation.

Le silicium libre peut réagir à haute température avec le Nickel ou le Cobalt de l'alliage, typiquement au-dessus de 700°C. En outrede la diffusion phase solide activée par la température, il peut y avoir la formation d'un eutectique à bas point de fusion qui va fortement dégrader le CMC et le métal. Ces réactions sont appelées « interaction CMC/Métal ». Or, les languettes métalliques logées dans les rainures d'étanchéité sont potentiellement soumises à des températures supérieures à 700°C et vont ainsi réagir avec le CMC dans le logement usiné.

Il existe donc un besoin pour réaliser une étanchéité entre des pièces d'un ensemble sectorisé sans risque de réaction ou de diffusion chimique à haute température.

### Exposé de l'invention

A cet effet, l'invention propose un assemblage pour turbine comprenant une pluralité de secteurs adjacents les uns aux autres, chaque secteur comprenant au moins un bord de liaison en matériau composite à matrice céramique (CMC), chaque bord de liaison comportant au moins une rainure ou un logement et une languette d'étanchéité présente dans chaque rainure ou logement, caractérisé en ce que chaque languette d'étanchéité présente une structure lamifiée comprenant une pluralité de lames, la lame supérieure et lame inférieure de la structure lamifiée étant constituées chacune d'un film en matériau céramique monolithique.

Les parties de la ou les languettes d'étanchéité destinées à être en contact avec le CMC des secteurs de l'assemblage, à savoir les faces inférieure et supérieure, sont constituées d'un film en matériau céramique qui est inerte chimiquement vis-à-vis du matériau CMC. On évite ainsi tout risque de réaction ou de diffusion chimique à haute température entre les languettes d'étanchéité et le matériau CMC des secteurs.

En outre, chaque languette d'étanchéité présente une structure lamifiée qui lui confère une plus grande souplesse et, par conséquent, une bonne résistance aux déformations rencontrées en fonctionnement et/ou pour s'adapter à la forme de la rainure dans laquelle elle est destinée à être logée (ex. rainure coudée) et ainsi optimiser l'étanchéité.

Selon une caractéristique particulière de l'assemblage de l'invention, le film en matériau céramique monolithique présente une épaisseur inférieure ou égale à 50 µm.

Selon un mode de réalisation de l'assemblage de l'invention, chaque languette d'étanchéité comprend une ou plusieurs lames intermédiaires présentes entre la lame inférieure et la lame supérieure de la structure lamifiée, chaque lame intermédiaire étant constituée d'un film en matériau céramique monolithique. Selon un aspect particulier de ce mode de réalisation. Le film en matériau céramique monolithique constituant chaque lame intermédiaire peut présenter une épaisseur inférieure ou égale à 50 µm.

Selon un autre mode de réalisation de l'assemblage de l'invention, chaque languette d'étanchéité comprend une ou plusieurs lames intermédiaires en matériau métallique présentes entre la lame inférieure et la lame supérieure de la structure lamifiée. Selon un aspect particulier de ce mode de réalisation, la ou les lames intermédiaires en matériau métallique sont en alliage à base nickel ou cobalt.

Selon une autre caractéristique particulière de l'assemblage de l'invention, les films en matériau céramique monolithique sont en un matériau choisi parmi : SiC, Si3N4 et tout type de matériau céramique oxyde de type Al2O3, YSZ, ou silicalate.

Selon une autre caractéristique particulière de l'assemblage de l'invention, un liant fugitif est présent entre les lames adjacentes de la structure lamifiée.

Selon une autre caractéristique particulière de l'assemblage de l'invention, les secteurs sont des secteurs d'anneau de turbine comprenant chacun une base annulaire ayant une face interne destinée à définir la face interne d'un anneau de turbine lorsque le secteur d'anneau est monté à une structure de support d'anneau et une face externe à partir de laquelle s'étend une ou plusieurs portions d'accrochage du secteur d'anneau à la structure de support d'anneau, chaque secteur d'anneau comprenant en outre deux bords de liaison inter-secteurs en matériau composite à matrice céramique présents aux extrémités circonférentielles du secteur, chaque bord de liaison inter-secteurs étant destiné à être en regard d'un secteur d'anneau voisin lorsque le secteur d'anneau est monté sur la structure de support d'anneau, chaque bord de liaison inter-secteurs comportant une ou plusieurs rainures dans laquelle ou lesquelles une languette d'étanchéité est partiellement logée.

Selon une autre caractéristique particulière de l'assemblage de l'invention, les secteurs sont des secteurs de distributeur comprenant un corps structural de secteur comportant un profil aérodynamique s'étendant suivant une direction radiale entre une plateforme inférieure et une plateforme extérieure et, suivant une direction axiale, entre un bord d'attaque et un bord de fuite, ledit secteur comprenant en outre deux bords de liaison inter-plateformes en matériau composite à matrice céramique présents aux extrémités circonférentielles de chaque plateforme, chaque bord de liaison inter-plateforme étant destinée à être en regard d'une plateforme d'un secteur voisin, chaque bord de liaison inter-plateformes comportant une ou plusieurs rainures dans laquelle ou lesquelles une languette d'étanchéité est partiellement logée.

### Brève description des dessins

[Fig. 1A] La figure 1A est une vue schématique en perspective éclatée d'une languette d'étanchéité conformément à un mode de réalisation de l'invention,
[Fig. 1B] La figure 1B est une vue schématique en perspective de la languette d'étanchéité de la figure 1A une fois assemblée,
[Fig. 2A] La figure 2A est une vue schématique en perspective éclatée d'une languette d'étanchéité conformément à un autre mode de réalisation de l'invention,
[Fig. 2B] La figure 2B est une vue schématique en perspective de la languette d'étanchéité de la figure 1A une fois assemblée,
[Fig. 3] La figure 3 est une vue schématique en perspective du secteur d'anneau de turbine muni de languettes d'étanchéité selon l'invention,
[Fig. 4] La figure 4 est une vue schématique en perspective d'un secteur de stator de turbine muni de languettes d'étanchéité selon l'invention.

### Description des modes de réalisation

L'invention s'applique d'une manière générale à tout ensemble ou assemblage pour turbine comprenant une pluralité de secteurs adjacents les uns aux autres par des bords de liaison en matériau composite à matrice céramique ou CMC, chaque bord de liaison comportant au moins une rainure ou un logement et une languette d'étanchéité présente dans chaque rainure.

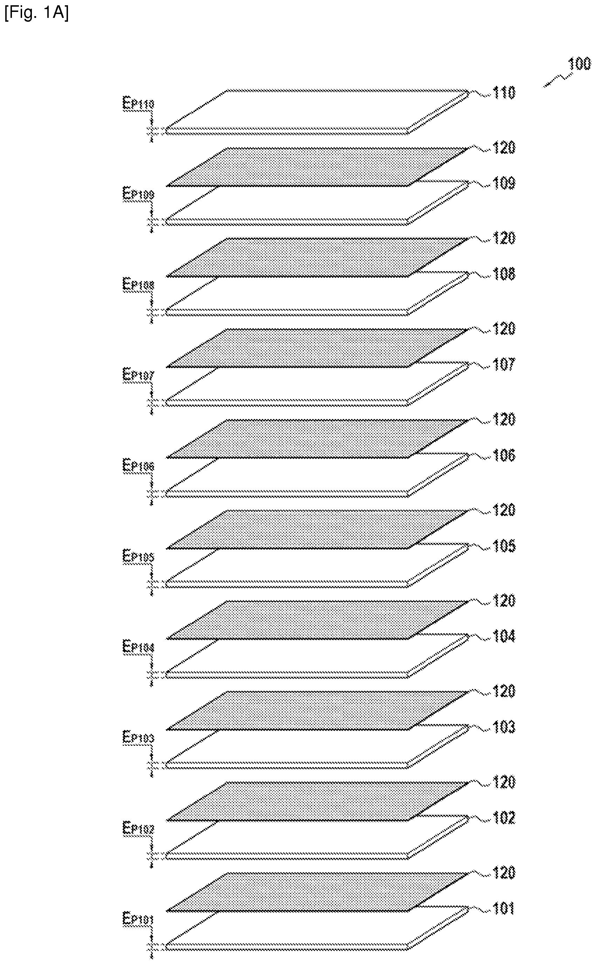

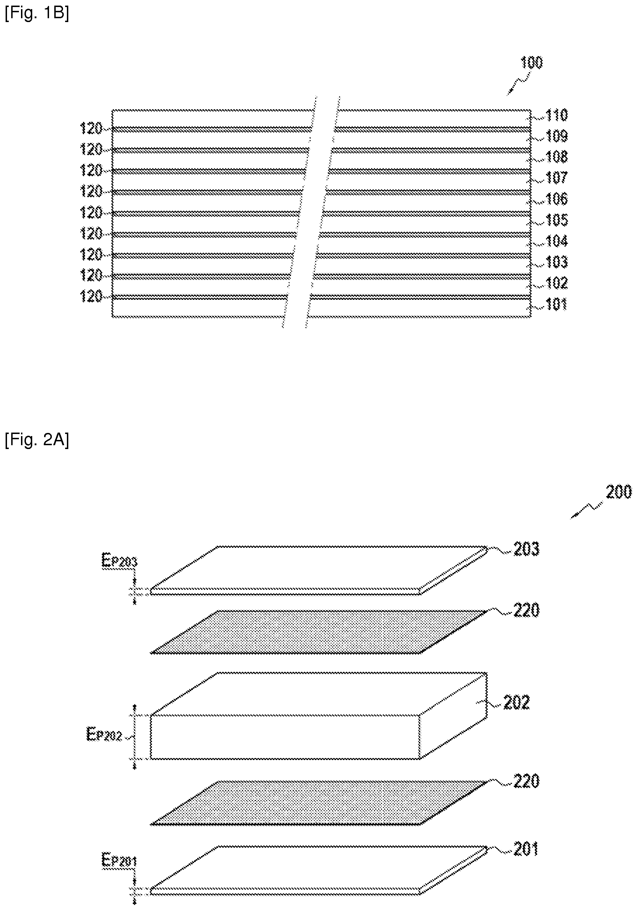

Les figures 1A et 1B illustrent une languette d'étanchéité 100 conformément à un mode de réalisation de l'invention. La languette d'étanchéité 100 présente une structure lamifiée comprenant une pluralité de lames 101 à 110. La lame inférieure 101 constitue la face inférieure de la languette 100 qui est destinée à venir en contact avec une portion inférieure d'une rainure présente sur un bord de liaison d'un secteur d'un assemblage pour turbine comme expliqué ci-après. La lame supérieure 110 constitue la face supérieure de la languette 100 qui est destinée à venir en contact avec une portion supérieure d'une rainure présente sur un bord de liaison d'un secteur d'un assemblage pour turbine.

Conformément à l'invention, les lames inférieure et supérieure sont constituées chacune d'un film en matériau céramique monolithique. On évite ainsi toute réaction ou diffusion chimique entre le matériau CMC du bord de liaison et la languette d'étanchéité car les surfaces de contact présentées par la languette sont constituées d'un matériau inerte chimiquement vis-à-vis du matériau CMC.

Le film en matériau céramique monolithique de la lame supérieure 101 et de la lame inférieure 110 présente de préférence une épaisseur E_{P101}, E_{P110} inférieure ou égale à 50 µm de manière à conférer aux lames supérieure et inférieure une bonne souplesse vis-à-vis des modes de sollicitation des languettes d'étanchéité qui correspondent à des déformations principalement en flexion. Le film en matériau céramique monolithique peut par exemple présenter une épaisseur comprise entre 10 µm et 50 µm.

Dans l'exemple décrit ici, la languette d'étanchéité 100 comprend également plusieurs lames intermédiaires 102 à 109 présentes entre la lame inférieure 101 et la lame supérieure 110 de la structure lamifiée. Les lames intermédiaires sont ici constituées chacune d'un film en matériau céramique monolithique par exemple de même nature que le matériau céramique des films des lames inférieure et supérieure. De même que pour la lame inférieure 101 et la lame supérieure 110, les films constitutifs des lames intermédiaires 102 à 109 présentent une épaisseur E_{P102} à E_{P109} inférieure ou égale à 50 µm, par exemple comprise entre 10 µm et 50 µm.

La juxtaposition de plusieurs lames fines indépendantes en matériau céramique monolithique permet d'obtenir la souplesse nécessaire à la languette d'étanchéité qui ne peut pas être obtenue avec une languette d'étanchéité constituée d'une seule lame épaisse en en matériau céramique monolithique en raison du caractère fragile de la céramique monolithique. En d'autres termes, l'utilisation d'une pluralité de lames fines indépendantes en matériau céramique monolithique permet d'obtenir la souplesse nécessaire pour s'adapter aux déformations rencontrées en fonctionnement sans risque de rupture et/ou pour s'adapter à la forme de la rainure dans laquelle elle est destinée à être logée (ex. rainure coudée) et ainsi optimiser l'étanchéité.

Selon une caractéristique optionnelle de l'invention, des couches de liant fugitif 120 peuvent être interposées entre les lames adjacentes 101 à 110 de la structure lamifiée comme illustrée sur la figure 1A. Les couches de liant fugitif 120 permettent de faciliter le montage de la languette d'étanchéité en assurant un maintien entre toutes les lames de la structure lamifiée. Le liant étant fugitif, il est rapidement éliminé dès la première montée en température de la languette d'étanchéité.

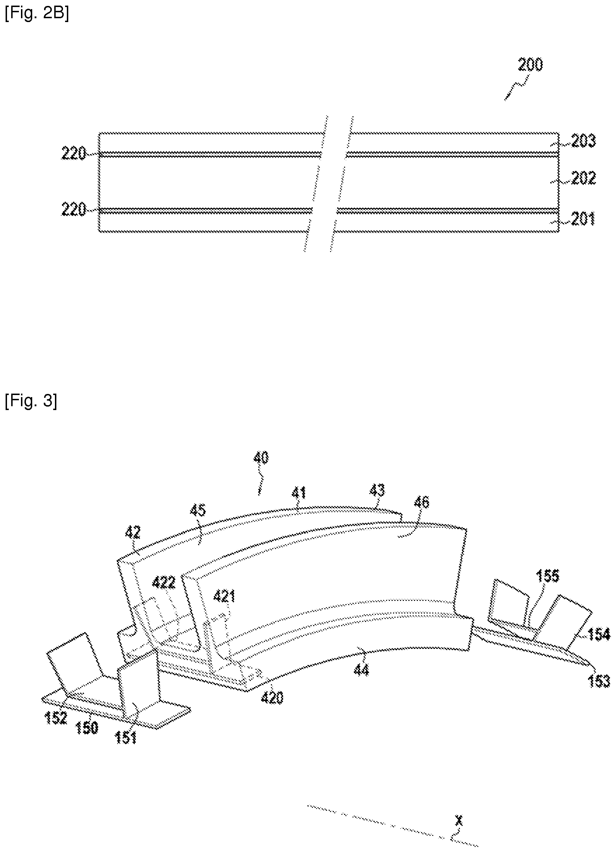

Les figures 2A et 2B illustrent une languette d'étanchéité 200 conformément à un autre mode de réalisation de l'invention qui diffère de la languette d'étanchéité 100 décrite précédemment en qu'une lame en matériau métallique est présente entre les lames inférieure et supérieure en matériau céramique monolithique. Plus précisément, comme pour la languette 100, la languette d'étanchéité 200 présente une structure lamifiée comprenant trois lames 201 à 203. La lame inférieure 201 constitue la face inférieure de la languette 200 qui est destinée à venir en contact avec une portion inférieure d'une rainure présente sur un bord de liaison d'un secteur d'un assemblage pour turbine tandis que la lame supérieure 203 constitue la face supérieure de la languette 200 qui est destinée à venir en contact avec une portion supérieure d'une rainure présente sur un bord de liaison d'un secteur d'un assemblage pour turbine.

Le film en matériau céramique monolithique de la lame supérieure 201 et de la lame inférieure 203 présente de préférence une épaisseur E_{P201}, E_{P203} inférieure ou égale à 50 µm de manière à conférer aux lames supérieure et inférieure une bonne souplesse vis-à-vis des modes de sollicitation des languettes d'étanchéité qui correspondent à des déformations principalement en flexion. Le film en matériau céramique monolithique peut par exemple présenter une épaisseur comprise entre 10 µm et 50 µm.

Dans l'exemple décrit ici, la languette d'étanchéité 100 comprend également une lame intermédiaire en matériau métallique 202 présente entre la lame inférieure 201 et la lame supérieure 203 de la structure lamifiée. La lame intermédiaire en matériau métallique 202 peut présenter une épaisseur E_{P202} supérieure à 50 µm, par exemple comprise entre 100 µm et 400 µm. La lame intermédiaire 202 peut être réalisée en alliage à base nickel ou cobalt.

Les réactions ou diffusion chimiques entre le matériau métallique de la lame intermédiaire et le CMC du bord de liaison sont évitées avec la languette d'étanchéité 200 car la lame intermédiaire 202 est recouverte par la lame inférieure 201 et la lame supérieure 203 qui forment les surfaces de contact de la languette avec le matériau CMC du bord de liaison, les lames inférieure et supérieure étant constituées d'un matériau inerte chimiquement vis-à-vis du matériau CMC.

Selon une caractéristique optionnelle de l'invention, des couches de liant fugitif 220 peuvent être interposées entre les lames adjacentes 201 à 203 de la structure lamifiée comme illustrée sur la figure 2A. Les couches de liant fugitif 220 permettent de faciliter le montage de la languette d'étanchéité en assurant un maintien des lames inférieure et supérieure 201 et 203 sur la lame intermédiaire 202. Le liant étant fugitif, il est rapidement éliminé dès la première montée en température de la languette d'étanchéité.

Selon une variante de réalisation, la languette d'étanchéité 200 peut comprendre plusieurs lames intermédiaires en matériau métallique.

Les films en matériau céramique monolithique utilisés pour former les lames inférieure et supérieure ainsi que les lames intermédiaires comme dans les languettes d'étanchéité 100 et 200 décrites précédemment peuvent être notamment réalisées avec un matériau céramique monolithique choisi parmi : SiC, Si₃N₄, et tout matériau céramique oxyde de type Al2O3, YSZ (zircone stabilisée à l'oxyde d'yttrium) ou silicalate.

Les languettes d'étanchéité qui viennent d'être décrites sont utilisées pour réaliser une étanchéité entre des secteurs d'un assemblage pour turbine, l'assemblage pouvant notamment correspondre à un anneau de turbine ou un distributeur sectorisé.

La figure 3 illustre un secteur d'anneau 40 ayant une section sensiblement en forme de π inversé avec une base annulaire 44 dont la face interne définit la veine d'écoulement de flux gazeux dans une turbine. Des pattes amont et aval 45, 46 s'étendent à partir de la face externe de la base annulaire 44 et sont destinées à être fixées à des brides annulaires d'une structure de support d'anneau non représentées sur la figure 3. Le secteur d'anneau 40 est un secteur d'une pluralité de secteurs d'anneau constituant ensemble un anneau de turbine, une étanchéité étant réalisée entre tous les secteurs d'anneau adjacents de l'anneau.

Le secteur d'anneau de turbine 40 est réalisé en matériau composite à matrice céramique (CMC) et comporte deux bords de liaison inter-secteurs 42 et 43 présents respectivement aux extrémités circonférentielles du secteur 40. Le bord de liaison 42 comporte une première rainure 420 recevant une partie d'une première languette d'étanchéité 150, une deuxième rainure 421 recevant une partie d'une deuxième languette d'étanchéité 151 et une troisième rainure 422 recevant une partie d'une troisième languette d'étanchéité 152. Le bord de liaison 43 comporte également trois rainures, non représentées sur la figure 3, similaires aux rainures 420, 421 et 422 du bord de liaison inter-secteurs 42 recevant respectivement des parties de languettes respectivement identiques aux languettes 153, 154 et 155.

Dans l'exemple décrit ici, les languettes d'étanchéité 150 à 155 présentent une structure lamifiée comprenant une pluralité de lames chacune constituée d'un film en matériau céramique monolithique comme pour la languette d'étanchéité 100 décrite précédemment. Toutefois, les languettes d'étanchéité 150 à 155 peuvent également présenter une structure lamifiée avec une âme métallique comme pour la languette d'étanchéité 200 décrite précédemment.

La structure lamifiée des languettes 150 à 155 confère à celles-ci une souplesse qui permet de conformer les languettes à la forme des rainures sans risque de rupture. En effet, avec sa structure lamifiée, la languette selon l'invention présente une très bonne résistance vis-à-vis des sollicitations rencontrées lors de son utilisation qui sont principalement en flexion et en torsion. En particulier, les languettes 152 et 155 peuvent être conformées suivant une forme coudée de manière à s'adapter à la forme respectivement de la rainure 422 présente sur le bord de liaison 42 et à la forme de la rainure (non représentée sur la figure 3) présente sur le bord de liaison 43. Une telle mise en forme ne peut pas être obtenue avec une languette d'étanchéité constituée d'un seul élément céramique monolithique épais sans risque de rupture.

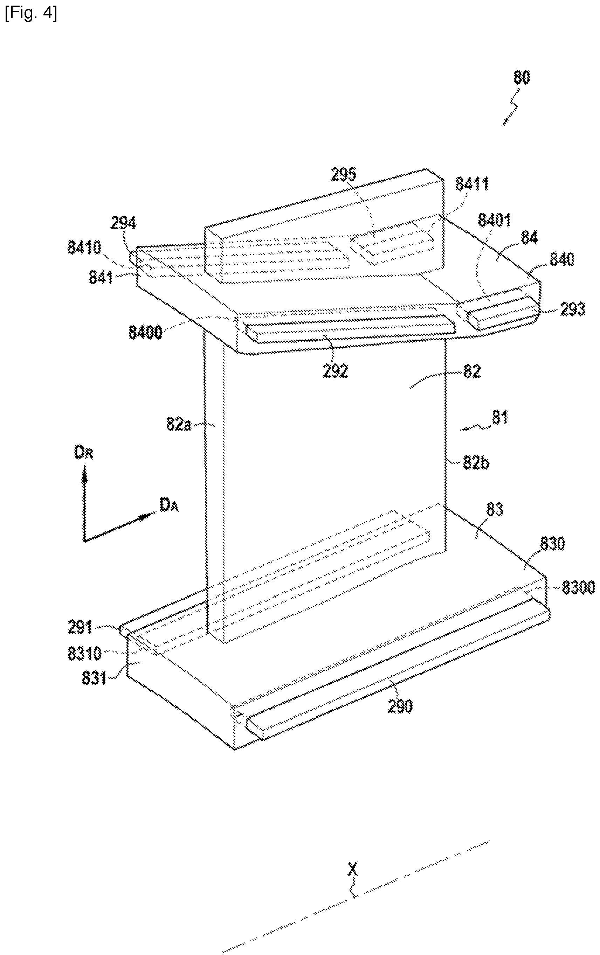

La figure 4 illustre une pièce de turbomachine correspondant à un secteur de distributeur de turbine 80. Le secteur de distributeur 80 comporte un corps structural de secteur 81 en matériau CMC comprenant un profil aérodynamique 82 s'étendant suivant une direction radiale D_{R} entre une plateforme inférieure 83 et une plateforme extérieure 84 et, suivant une direction axiale D_{A}, entre un bord d'attaque 82a et un bord de fuite 82b. Le secteur de distributeur 80 est un secteur d'une pluralité de secteurs de distributeur constituant ensemble un distributeur de turbine, une étanchéité étant réalisée entre tous les secteurs de distributeur adjacents du distributeur.

Le secteur d'anneau de turbine 80 comprend en outre au niveau de la plateforme inférieure 83 deux bords de liaison inter-plateformes 830 et 831 présents respectivement aux extrémités circonférentielles de la plateforme inférieure 83. De même, le secteur d'anneau de turbine 80 comprend au niveau de la plateforme extérieure 84 deux bords de liaison inter-plateformes 840 et 841 présents respectivement aux extrémités circonférentielles de la plateforme extérieure 84.

Les bords de liaison 830 et 831 comportent respectivement une rainure 8300 et une rainure 8310, la rainure 8300 recevant une partie d'une première languette d'étanchéité 290 tandis que la rainure 8310 reçoit une partie d'une deuxième languette d'étanchéité 291. Le bord de liaison 840 comporte deux rainures 8400 et 8401 recevant respectivement une partie de troisième et quatrième languettes d'étanchéité 292 et 293. Le bord de liaison 841 comporte également deux rainures 8410 et 8411 recevant respectivement une partie d'une quatrième languette d'étanchéité 294 et une partie d'une cinquième languette d'étanchéité 295.

Dans l'exemple décrit ici, les languettes d'étanchéité 290 à 295 présentent une structure lamifiée comprenant une âme métallique constitué d'une ou plusieurs lames en matériau métallique et des lames inférieure et supérieure chacune constituée d'un film en matériau céramique monolithique comme pour la languette d'étanchéité 200 décrite précédemment. Toutefois, les languettes d'étanchéité 290 à 295 peuvent également présenter une structure lamifiée comprenant une pluralité de lames constituées par un film en matériau céramique monolithique comme pour la languette d'étanchéité 100 décrite précédemment.

La structure lamifiée des languettes 209 à 295 confère à celles-ci une souplesse qui permet de conformer les languettes à la forme des rainures sans risque de rupture.

## Revendications

1. Assemblage pour turbine comprenant une pluralité de secteurs (40) adjacents les uns aux autres, chaque secteur comprenant au moins un bord de liaison en matériau composite à matrice céramique (42, 43), chaque bord de liaison comportant au moins une rainure ou logement (420, 421, 422) et une languette d'étanchéité (150, 151, 152) présente dans chaque rainure ou logement, chaque languette d'étanchéité présentant une structure lamifiée comprenant une pluralité de lames (101, 102, 103, 104, 105, 106, 107, 108, 109, 110), **caractérisé en ce que** la lame inférieure (101) et lame supérieure (110) de la structure lamifiée sont constituées chacune d'un film en matériau céramique monolithique.

2. Assemblage selon la revendication 1, dans lequel le film en matériau céramique monolithique présente une épaisseur inférieure ou égale à 50 µm.

3. Assemblage selon la revendication 1 ou 2, dans lequel chaque languette d'étanchéité (100) comprend une ou plusieurs lames intermédiaires (102, 103, 104, 105, 106, 107, 108, 109) présentes entre la lame inférieure (101) et la lame supérieure (110) de la structure lamifiée, chaque lame intermédiaire étant constituée d'un film en matériau céramique monolithique.

4. Assemblage selon la revendication 3, dans lequel le film en matériau céramique monolithique constituant chaque lame intermédiaire présente une épaisseur inférieure ou égale à 50 µm.

5. Assemblage selon la revendication 1, dans lequel chaque languette d'étanchéité (200) comprend une ou plusieurs lames intermédiaires (202) en matériau métallique présentes entre la lame inférieure (201) et la lame supérieure (202) de la structure lamifiée.

6. Assemblage selon la revendication 5, dans lequel la ou les lames intermédiaires (202) en matériau métallique sont en alliage à base nickel ou cobalt.

7. Assemblage selon l'une quelconque des revendications 1 à 6, dans lequel les films en matériau céramique sont en un matériau choisi parmi : SiC, Si₃N₄, Al₂O₃, YSZ, silicalate.

8. Assemblage selon l'une quelconque des revendications 1 à 7, dans lequel un liant fugitif (120, 220) est présent entre les lames adjacentes de la structure lamifiée.

9. Assemblage selon l'une quelconque des revendication 1 à 8, dans lequel les secteurs sont des secteurs d'anneau de turbine (40) comprenant chacun une base annulaire (44) ayant une face interne destinée à définir la face interne d'un anneau de turbine lorsque le secteur d'anneau est monté à une structure de support d'anneau et une face externe à partir de laquelle s'étend une ou plusieurs portions d'accrochage (45, 46) du secteur d'anneau à la structure de support d'anneau, chaque secteur d'anneau (40) comprenant en outre deux bords de liaison inter-secteurs (42, 43) en matériau composite à matrice céramique présents aux extrémités circonférentielles du secteur (41), chaque bord de liaison inter-secteurs étant destiné à être en regard d'un secteur d'anneau voisin lorsque le secteur d'anneau est monté sur la structure de support d'anneau, chaque bord de liaison inter-secteurs comportant une ou plusieurs rainures (420, 421, 422, 430, 431, 432) dans laquelle ou lesquelles une languette d'étanchéité (150, 151, 152, 153, 154, 155) est partiellement logée.

10. Assemblage selon l'une quelconque des revendications 1 à 8, dans lequel les secteurs sont des secteurs de distributeur (80) comprenant un corps structural de secteur (81) comportant un profil aérodynamique (82) s'étendant suivant une direction radiale (D_{R}) entre une plateforme inférieure (83) et une plateforme extérieure (84) et, suivant une direction axiale (D_{A}), entre un bord d'attaque (82a) et un bord de fuite (82b), ledit secteur comprenant en outre deux bords de liaison inter-plateformes (830, 831 ; 840, 841) en matériau composite à matrice céramique présents aux extrémités circonférentielles de chaque plateforme (83 ; 84), chaque bord de liaison inter-plateforme étant destinée à être en regard d'une plateforme d'un secteur voisin, chaque bord de liaison inter-plateformes comportant une ou plusieurs rainures (8300 ; 8310 ; 8400, 8401 ; 8410, 8411) dans laquelle ou lesquelles une languette d'étanchéité (290, 291, 292, 293, 294, 295) est partiellement logée.

## Patentansprüche

1. Baugruppe für eine Turbine, umfassend mehrere Sektoren (40), die zueinander benachbart sind, wobei jeder Sektor mindestens eine Verbindungskante (42, 43) aus einem Verbundmaterial mit Keramikmatrix umfasst, wobei jede Verbindungskante mindestens eine Nut oder Aufnahme (420, 421, 422) und einen in jeder Nut oder Aufnahme vorhandenen Dichtungsstab (150, 151, 152) beinhaltet, wobei jeder Dichtungsstab eine laminierte Struktur aufweist, die mehrere Lagen (101, 102, 103, 104, 105, 106, 107, 108, 109, 110) umfasst, **dadurch gekennzeichnet, dass** die untere Lage (101) und die obere Lage (110) der laminierten Struktur jeweils durch einen monolithischen Film aus Keramikmaterial gebildet sind.

2. Baugruppe nach Anspruch 1, wobei der monolithische Film aus Keramikmaterial eine Dicke kleiner oder gleich 50 µm aufweist.

3. Baugruppe nach Anspruch 1 oder 2, wobei jeder Dichtungsstab (100) eine oder mehrere Zwischenlagen (102, 103, 104, 105, 106, 107, 108, 109) umfasst, die zwischen der unteren Lage (101) und der oberen Lage (110) der laminierten Struktur vorhanden sind, wobei jede Zwischenlage durch einen monolithischen Film aus Keramikmaterial gebildet ist.

4. Baugruppe nach Anspruch 3, wobei der monolithische Film aus Keramikmaterial, der jede Zwischenlage bildet, eine Dicke kleiner oder gleich 50 µm aufweist.

5. Baugruppe nach Anspruch 1, wobei jeder Dichtungsstab (200) eine oder mehrere Zwischenlagen (202) aus Metallmaterial umfasst, die zwischen der unteren Lage (201) und der oberen Lage (202) der laminierten Struktur vorhanden sind.

6. Baugruppe nach Anspruch 5, wobei die Zwischenlage(n) (202) aus Metallmaterial aus einer Legierung auf Nickel- oder Cobaltbasis ausgebildet ist/sind.

7. Baugruppe nach einem der Ansprüche 1 bis 6, wobei die Filme aus Keramikmaterial aus einem Material ausgebildet sind, das ausgewählt ist aus: SiC, Si₃N₄, Al₂O₃, YSZ, Silicat.

8. Baugruppe nach einem der Ansprüche 1 bis 7, wobei ein flüchtiges Bindemittel (120, 220) zwischen den benachbarten Lagen der laminierten Struktur vorhanden ist.

9. Baugruppe nach einem der Ansprüche 1 bis 8, wobei es sich bei den Sektoren um Turbinenringsektoren (40) handelt, die jeweils eine Ringbasis (44) umfassen, die eine Innenfläche, die dazu vorgesehen ist, die Innenfläche eines Turbinenrings zu definieren, wenn der Ringsektor an einer Ringtragstruktur angebracht ist, und eine Außenfläche, von der sich ein oder mehrere Einrastabschnitte (45, 46) des Ringsektors an der Ringtragstruktur erstrecken, aufweist, wobei jeder Ringsektor (40) ferner zwei Verbindungskanten (42, 43) zwischen Sektoren aus einem Verbundmaterial mit Keramikmatrix umfasst, die an Umfangsenden des Sektors (41) vorhanden sind, wobei jede Verbindungskante zwischen Sektoren dazu vorgesehen ist, einem Nachbarringsektor zugewandt zu sein, wenn der Ringsektor an der Ringtragstruktur angebracht ist, wobei jede Verbindungskante zwischen Sektoren eine oder mehrere Nuten (420, 421, 422, 430, 431, 432) beinhaltet, in der oder denen ein Dichtungsstab (150, 151, 152, 153, 154, 155) teilweise aufgenommen ist.

10. Baugruppe nach einem der Ansprüche 1 bis 8, wobei es sich bei den Sektoren um Verteilersektoren (80) handelt, die einen strukturellen Sektorkörper (81) umfassen, der ein Strömungsprofil (82) beinhaltet, das sich gemäß einer Radialrichtung (D_{R}) zwischen einer inneren Plattform (83) und einer äußeren Plattform (84) und gemäß einer Axialrichtung (D_{A}) zwischen einer Vorderkante (82a) und einer Hinterkante (82b) erstreckt, wobei der Sektor ferner zwei Verbindungskanten (830, 831; 840, 841) zwischen Plattformen aus einem Verbundmaterial mit Keramikmatrix umfasst, die an Umfangsenden jeder Plattform (83; 84) vorhanden sind, wobei jede Verbindungskante zwischen Plattformen dazu vorgesehen ist, einer Plattform eines Nachbarsektors zugewandt zu sein, wobei jede Verbindungskante zwischen Plattformen eine oder mehrere Nuten (8300; 8310; 8400, 8401; 8410, 8411) beinhaltet, in der oder denen ein Dichtungsstab (290, 291, 292, 293, 294, 295) teilweise aufgenommen ist.

## Claims

1. An assembly for a turbine comprising a plurality of sectors (40) which are adjacent to one another, each sector comprising at least one connecting edge of composite material with a ceramic matrix (42, 43), each connecting edge comprising at least one groove or a housing (420, 421, 422) and a sealing tongue (150, 151, 152) present in each groove or housing, each sealing tongue having a laminated structure comprising a plurality of strips (101, 102, 103, 104, 105, 106, 107, 108, 109, 110), **characterized in that** the lower strip (101) and the upper strip (110) of the laminated structure each being formed by a film of monolithic ceramic material.

2. The assembly according to claim 1, wherein the film of monolithic ceramic material has a thickness less than or equal to 50 µm.

3. The assembly according to claim 1 or 2, wherein each sealing tongue (100) comprises one or more intermediate strips (102, 103, 104, 105, 106, 107, 108, 109) present between the lower strip (101) and the upper strip (110) of the laminated structure, each intermediate strip being formed by a film of monolithic ceramic material.

4. The assembly according to claim 3, wherein the film of monolithic ceramic material constituting each intermediate strip has a thickness less than or equal to 50 µm.

5. The assembly according to claim 1, wherein each sealing tongue (200) comprises one or more intermediate metallic material strips (202) present between the lower strip (201) and the upper strip (202) of the laminated structure.

6. The assembly according to claim 5, wherein the intermediate metallic material strip(s) (202) are made of a nickel or cobalt based alloy.

7. The assembly according to any one of claims 1 to 6, wherein the films of ceramic material are made of a material selected from: SiC, Si₃N₄, Al2O3, YSZ, silicalate.

8. The assembly according to any one of claims 1 to 7, wherein a fugitive binder (120, 220) is present between the adjacent strips of the laminated structure.

9. The assembly according to any one of claims 1 to 8, wherein the sectors are turbine ring sectors (40) each comprising an annular base (44) having an internal face intended to define the internal face of a turbine ring when the ring sector is mounted to a ring support structure and an external face from which extends one or more portions (45, 46) for hooking the ring sector to the ring support structure, each ring sector (40) further comprising two inter-sector connecting edges (42, 43) of composite material with a ceramic matrix present at the circumferential ends of the sector (41), each inter-sector connecting edge being intended to face a neighboring ring sector when the ring sector is mounted on the ring support structure, each inter-sector connecting edge including one or more grooves (420, 421, 422, 430, 431, 432) in which one or more sealing tongues (150, 151, 152, 153, 154, 155) is partially housed.

10. The assembly according to any one of claims 1 to 8, wherein the sectors are distributor sectors (80) comprising a sector structural body (81) including an aerodynamic profile (82) extending in a radial direction (D_{R}) between a lower platform (83) and an external platform (84) and, in an axial direction (D_{A}), between a leading edge (82a) and a trailing edge (82b), said sector further comprising two inter-platform connecting edges (830, 831; 840, 841) of composite material with a ceramic matrix present at the circumferential ends of each platform (83; 84), each inter-platform connecting edge being intended to be opposite a platform of a neighboring sector, each inter-platform connecting edge including one or more grooves (8300; 8310; 8400, 8401; 8410, 8411) in which a sealing tongue (290, 291, 292, 293, 294, 295) is partially housed.
